# EUROPEAN PATENT APPLICATION

(11) **EP 1 607 958 A2**
(43) Date of publication of application: **21.12.2005**
(21) Application number: 05104287.7
(22) Date of filing: 19.05.2005
(51) Int. Cl.: G11B 15/61, G11B 15/665

(54) **A tape deck**

(30) Priority: 18.06.2004 KR 2004045418
(71) Applicant: Samsung Electronics Co, Ltd, Suwon-si, Gyeonggi-do 442-742 (KR)
(72) Inventor: SIM, Jae-hoon, 102-1008, Dongsuwon LG Village,, Gyeonggi-do (KR); SEO, Jae-kab, 301-402, Dongsuwon LG Village 3rd,, Gyeonggi-do (KR); KIM, Myoung-joon, 2-201, Green Villa, 44-10,, Gyeonggi-do (KR); KIM, Jun-young, 108-1904, Dongsuwon LG Village 1st, Gyeonggi-do (KR); KIM, Bong-joo, 208-1001, Dongsuwon LG Village,, Gyeonggi-do (KR); CHOI, Hyeong-seok, 250-1404, Hwanggol-maeul, Yeongtong-gu, Suwon-si, Gyeonggi-do (KR)
(74) Representative: Geary, Stuart Lloyd

(57) **Abstract**

A deck plate integrally forming the drum base and the guide rail, and a magnetic recording/playing apparatus having the same are disclosed. The deck plate has a chassis integrally forming a drum base for slopingly supporting a head drum assembly in a predetermined angle together with a guide rail for guiding at least one pole base assembly.

## Description

The present invention relates to a tape deck comprising a chassis, a head drum mounted on said chassis, a pole base, and a pole base guide slot in the chassis.

Generally, a magnetic recording/reproducing apparatus such as a video tape recorder or a camcorder includes a tape deck (sometimes called a deck mechanism) for recording/reproducing audio and video information to/from a magnetic tape by feeding a magnetic tape along a predetermined path.

The tape deck performs basic functions of recording/playing (REC/PLAY) and fast forward/rewind (FF/REW). The tape deck also performs functions, such as playing a video still or a slow motion video, high speed search or reverse playing. These functions are selectively included depending on the type of products into which the deck is included. The functions are usually changed using a predetermined program.

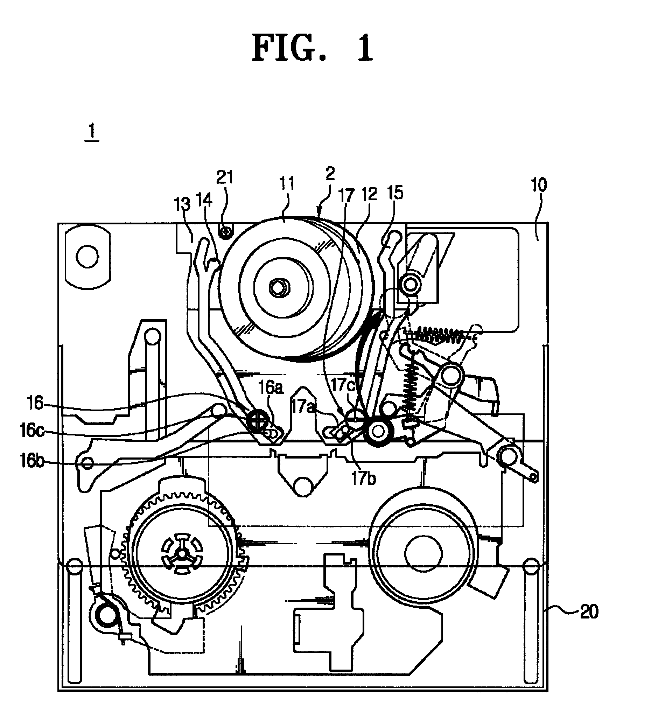

Figure 1 illustrates a known deck mechanism 1 applied to a camcorder. The deck mechanism 1 comprises a main chassis 10, a sub-chassis 20 arranged to move relative to the main chassis 10, a head drum assembly 2, and a first and a second pole base assemblies 16 and 17 having a plurality of rollers and poles. The pole base assemblies 16 and 17 move so that a magnetic tape may be arranged in a predetermined position inside of the main chassis 10 upon loading and unloading of the magnetic tape.

The head drum assembly 2 comprises a head drum 11 having a magnetic head for recording/playing information by scanning the magnetic tape, a drum base 12 for fixing the head drum 11 so as to have a predetermined slope relative to the main chassis 10.

The first and the second pole base assemblies 16 and 17 comprise a first and a second pole base 16a and 17a for sliding along a first and a second guide groove 14 and 15 of a guide rail 13 installed in the main chassis 10 upon loading/unloading the magnetic tape. Also provided on the first and second pole base assemblies 16 and 17 are a first and a second slant poles 16b and 17b which slopingly project onto the first and the second pole bases 16a and 17a, as well as a first and a second guide roller 16c and 17c for controlling the up and down movement of the magnetic tape loaded onto the first and the second slant poles 16b and 17b.

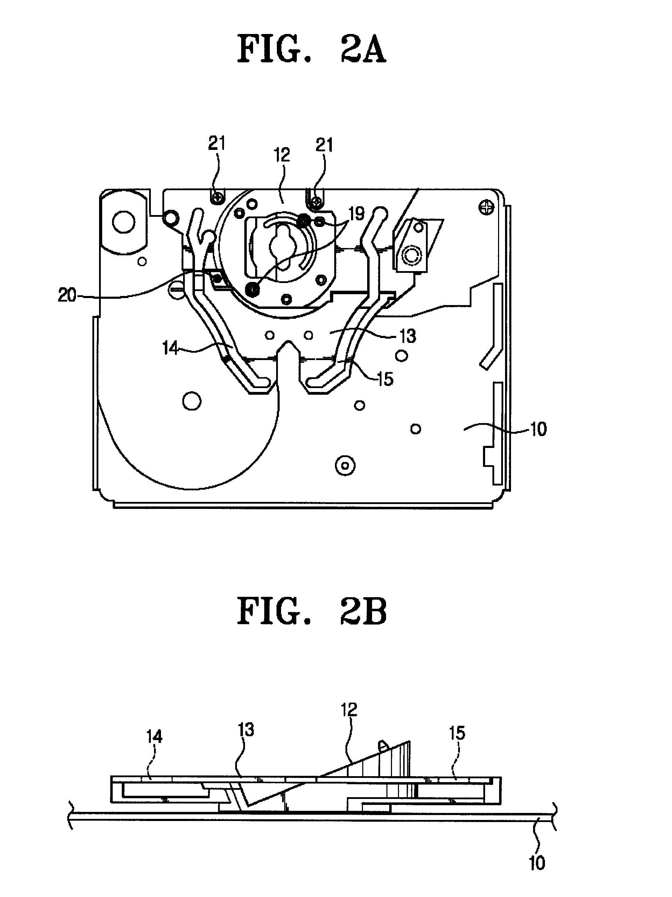

As shown in Figures 1 and 2B, the guide rail 13 is a predetermined height above the main chassis 10 to guide and support the first and the second pole bases 16a and 17a.

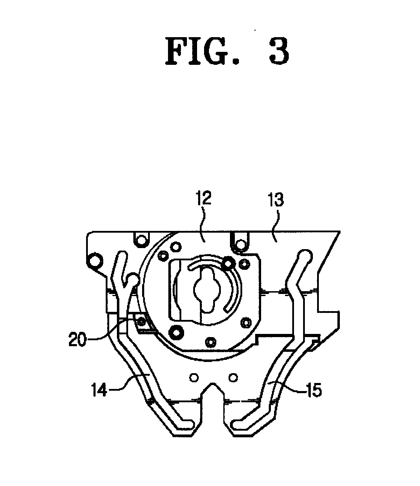

However, according to the known deck mechanism 1, the drum base 12 for installing the head drum 11 on the main chassis 10 is manufactured as a separate part and fitted to the main chassis 10 using a screw 19. Also, the guide rail 13 for guiding the first and the second pole bases 16a and 17a upon loading/unloading the magnetic tape, is manufactured as a separate part and assembled to the main chassis 10 and the drum base 12 using screws 20 and 21 as shown in Figures 2A, 2B, and 3.

Therefore, according to the known deck mechanism 1, since the drum base 12 and the guide rail 13 must be manufactured using separate moulds, manufacturing costs increase. Further, since the assembly requires screws for fastening, the assembling process is complicated and productivity is reduced.

Also, according to the known deck mechanism 1, since the guide rail 13 is located a predetermined height above the main chassis 10, there is the possibility that the guide rail 13 interferes with the inside or other parts of a cassette tape, and thereby the deck mechanism 1 may not correctly load/unload the magnetic tape.

An object of the present invention is to address at least the above problems and/or disadvantages and to provide at least the advantages described below. Accordingly, an object of the present invention is to provide a deck plate and a magnetic recording/playing apparatus having the same that can reduce the number of parts with a simple construction and operate in a stable manner.

The present invention relates to a tape deck comprising a chassis, a head drum mounted on said chassis, a pole base, and a pole base guide slot in the chassis.

A tape deck according to the present invention is characterised in that the chassis is configured to define the full extent of the guide path therein.

Additional other and preferred features are set forth in claims 2 and 3 appended hereto.

An embodiment of the present invention will now be described, by way of example only, and with reference to Figures 4 to 9, in which:
Figure 1 is a schematic plan view of a known tape deck a camcorder;
Figures 2A and 2B are a plan view and a side view, respectively, illustrating a main chassis of the tape deck mounting a drum base and a guide rail shown in Figure 1;
Figure 3 is a plan view of the drum base and the guide rail shown in Figure 2A;
Figures 4 and 5 are schematic plan views of a tape deck of a camcorder adopting a deck plate according to embodiments of the present invention;
Figure 6 is a plan view of a deck plate shown in Figures 4 and 5;
Figure 7 is a partial, cross-sectional view of a drum base of the deck plate shown in Figures 4 and 5 illustrating a status where a head drum is mounted;
Figure 8 is a partial, plan view of a first pole base assembly of a tape running guide unit of the deck mechanism shown in Figures 4 and 5; and
Figure 9 is a side, cross-sectional view of a first pole base assembly of a tape running guide unit of the tape deck shown in Figures 4 and 5.

Throughout the drawings, it should be understood that like reference numbers refer to like features, structures, and elements.

The matters defined in the description such as a detailed construction and elements are provided to assist in a comprehensive understanding of the invention. Thus, descriptions of well-known functions or constructions are omitted for the sake of clarity and conciseness.

A camcorder, which is a magnetic recording/playing apparatus adopting a deck plate according to an embodiment of the present invention, includes a tape deck for playing/recording audio and video information to and from a magnetic tape by feeding a magnetic tape along a predetermined path.

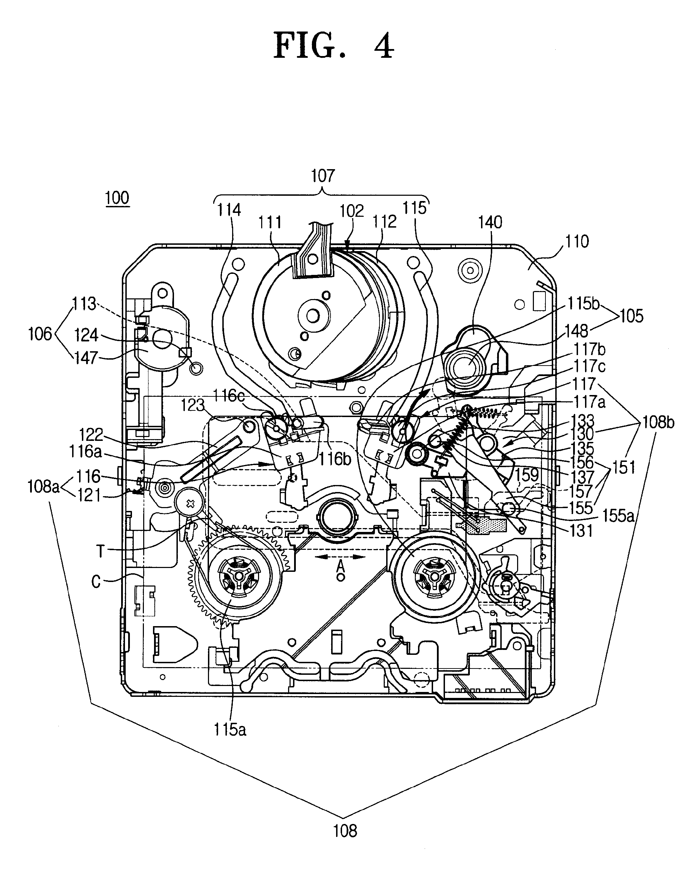

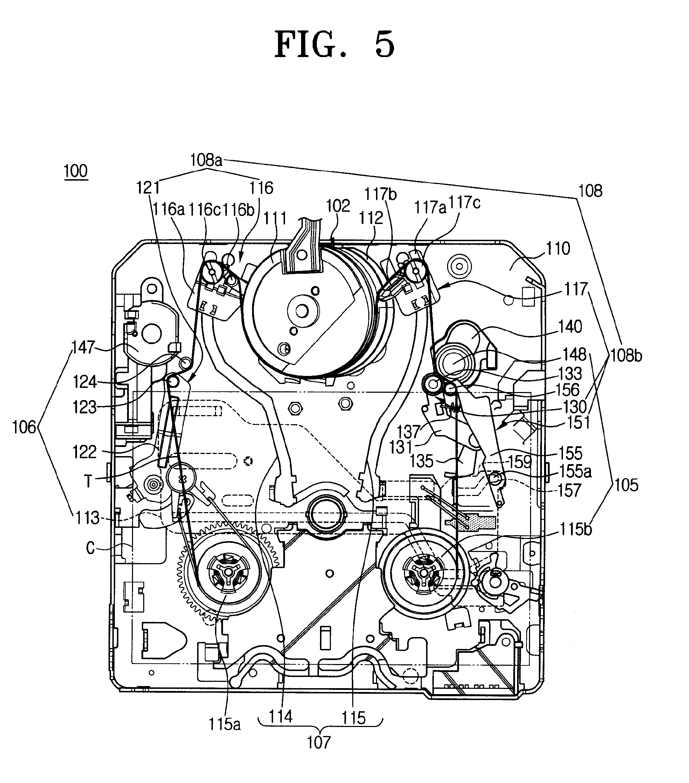

Referring to Figures 4 and 5, a tape deck 100 comprises a deck plate 110, a running operation unit 105 for feeding a magnetic tape T, a tape running guide unit 108 for guiding the magnetic tape T fed on the deck plate 110 by the running operation unit 105, and a loading operation unit 106 for moving the elements of the tape running guide unit 108 upon the loading/unloading of the magnetic tape T. The deck plate 110 comprises a single chassis. The chassis 110 has a head drum assembly 102 mounted at its upper central portion in Figure 4.

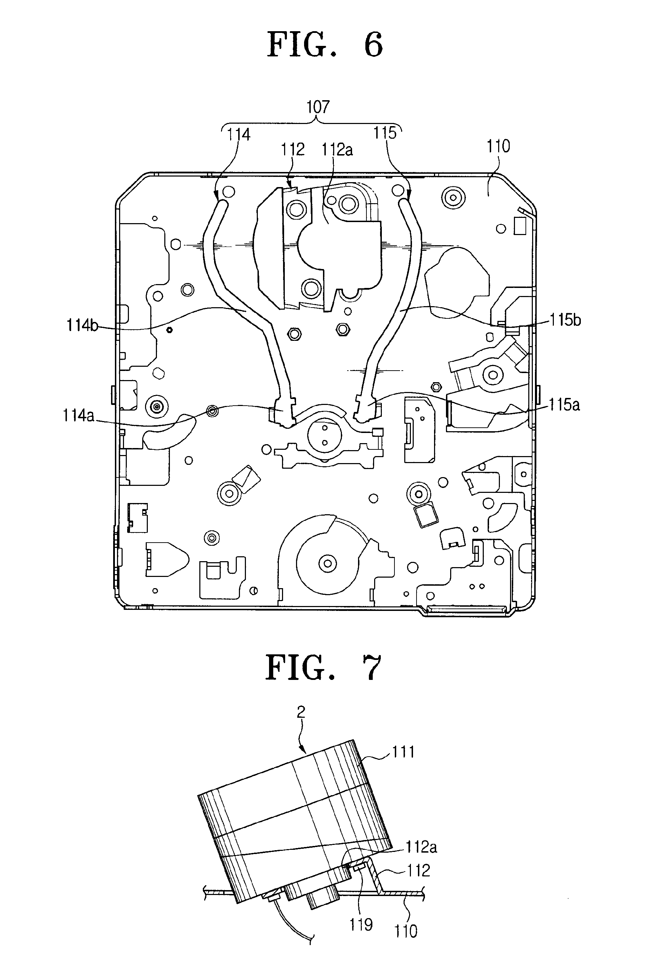

The head drum assembly 102 comprises a head drum 111 having a magnetic head for recording/playing information by scanning the magnetic tape, and a drum base 112 for fixing and installing the head drum 111. The head drum 111 is installed using screws 119 (Figure 7) so that the head drum 111 forms a predetermined slope relative to the chassis 110.

As shown in Figure 6 and 7, the drum base 112 has a slant fixing surface 112a that is formed integrally with the chassis 110 and bent at a predetermined angle.

The slant fixing surface 112a is formed out of a part of the chassis 110 that is preferably press cut and projected upwards from the main chassis 110.

The running operation unit 105 comprises a capstan shaft 148 rotated by a capstan motor 140 and reel tables 115a and 115b on a supplying and a winding side. The reel tables 115a and 115b are operated by the capstan motor 140 and receive the tape reel of a cassette tape C. The capstan motor 140 supplies power to the reel tables 115a and 115b on both the supplying and the winding sides via a power transferring gear train (not shown). Since the power transferring gear train is known in the art, a detail description thereof will be omitted.

The loading operation unit 106 comprises a loading motor 147 installed in the chassis 110 and a main slide member 113 installed in the chassis 110 so as to slide in a reciprocating manner in the direction of arrow A. The main slide member 113 uses a slide member operation unit (not shown) which receives power from the loading motor 147. Since the slide member operation unit is known in the art, a detail description thereof will be omitted.

The main slide member 113 has a guide protuberance 159 and a guide groove 157 which function in cooperation with the lower end of a pressing lever 135 of a pinch roller assembly 130 of a tape running guide unit 108 and a joining protuberance 155a of a review arm 155 of a review pole assembly 151, which will be described below with reference to the loading/unloading the magnetic tape T.

The tape running guide unit 108 comprises tape guide units 108a and 108b on a supplying and a winding reel side. The tape running guide unit 108 has a plurality of rollers and fixed pole members which move so that the magnetic tape T is arranged in a predetermined position of the inside of the chassis 110 when the magnetic tape T is loaded/unloaded.

The tape guide unit 108a on the supplying reel side has a tension pole assembly 121 and a first pole base assembly 116.

The tension pole assembly 121 comprises a tension arm 122 pivotably installed in the chassis 110, a first tension pole 123 projecting upwardly at a front end of the tension arm 122, and a fixed pole or an impedance roller 124 fixed in the chassis 110.

The tension arm 122 is rotated to a position as shown in Figure 4 or Figure 5 by a tension arm operation unit (not shown) which receives power from the loading motor 147 when the magnetic tape T is loaded/unloaded. Since the tension arm operation unit is known in the art, a detailed description thereof will be omitted.

The tension pole 123 exerts a predetermined tension on the magnetic tape T by pulling the magnetic tape T to the left of the chassis 110 and the impedance roller 124 controls the up and down movement of the feeding of the magnetic tape T using the tension pole 123.

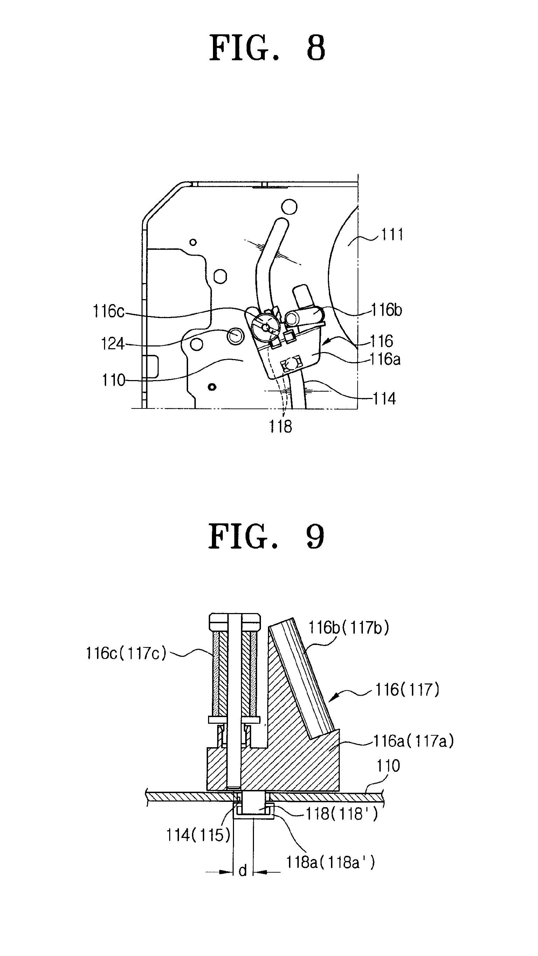

As shown in Figures 8 and 9, a first pole base assembly 116 comprises a first pole base 116a for sliding along a first guide groove 114 of a guide rail 107. The function of the first pole base 116a will be described below relative to a known pole base operation unit (not shown) operated by receiving power from the loading motor 147. The first pole base assembly 116 also comprises a first slant pole 116b slopingly projected on the first pole base 116a, and a first guide roller 116c for controlling the up and down movement of a magnetic tape T which is located on the first slant pole 116b.

As shown in Figures 8 and 9, the first pole base 116c has two first guide bosses 118 at its lower part.

The first guide bosses 118 are guided by being inserted into the first guide groove 114 of the guide rail 107. The first guide bosses 118 has a first supporting end 118a whose width is greater than the width of the first guide groove 114. This prevents the first guide bosses 118 from separating from the first guide groove 114.

Further, the first guide bosses 118 are arranged so that its central axis is a predetermined distance d from a central axis of the first guide roller 116c towards the head drum assembly 102. The predetermined distance d is about 1.2mm.

The reason why the first guide bosses 118 are formed in a lower part of the first pole base 116a so that its central axis is separated by as much as about 1.2mm from the central axis of the first guide roller 116c, is to support the first pole base 116a at a centre of gravity between the first slant pole 116b and the first guide roller 116c. Also the predetermined separation is useful for the first pole base 116c because it prevents interference due to contact with the impedance roller 124 and the head drum 111 when the first pole base 116c moves between the impedance roller 124 and the head drum 111 of the head drum assembly 102 when the magnetic tape T is loaded/unloaded as shown in FIG. 8.

Referring back to Figure 4, the tape guide unit 108b on the winding reel side comprises a review pole assembly 151, a second pole base assembly 117, and a pinch roller assembly 130.

The review pole assembly 151 comprises a review arm 155 pivotably installed on the chassis 110, and a review pole 156 projecting upwards and located at a front end of the review arm 155.

The review arm 155 has a joining protuberance 155a joined to a guide groove 157 of the main slide member 113 so as to cooperate with the main slide member 113 when the magnetic tape T is load/unloaded. Preferably the review arm 155 gives a predetermined tension to the magnetic tape T by pulling the magnetic tape T to the right of the chassis 110.

The second pole base assembly 117 has the same construction as the first pole base assembly 116 except that it is preferably symmetrically arranged relative to the first pole base assembly 116.

As shown in the drawings, the second pole base assembly 117 comprises a second pole base 117a for sliding along a second guide groove 115 of a guide rail 107 which will be described below when the magnetic tape is loaded/unloaded, a second slant pole 117b slopingly projected on the second pole base 117a and a second guide roller 117c for controlling the up and down movement of a magnetic tape T located on the second slant pole 117b.

Like the first pole base 116a of the first pole base assembly 116, the second pole base 117a has a second guide boss 118' projecting from the lower part so that its central axis is a predetermined distance d away from the central axis of the second guide roller 117c in the direction of the head drum assembly 102. Preferably, the distance is about 1.2mm.

The second guide boss 118', as shown in Figure 9, is guided by being inserted into the second guide groove 115 of the guide rail 107 and has a second support end 118a' which has a width greater than that of the second guide groove 115. This prevents the second guide boss 118' from separating from the second guide groove 115.

The pinch roller assembly 130 comprises a pinch roller arm 131 pivotably installed in the chassis 110, a pinch roller 133 rotatably installed at the end of the pinch roller arm 131, a pressing lever 135 for rotating about a rotational axis of the pinch roller arm 131, and a tension spring 137 for connecting the pressing lever 135 with the pinch roller arm 131.

As shown in Figure 6, the guide rail 107 comprises a first and a second guide groove 114 and 115 formed on the chassis 110. These correspond to a first and a second guide bosses 118 and 118', respectively, so as to guide the pole base assemblies 116 and 117 along the entire path by receiving the first and the second guide bosses 118 and 118' of the first and the second pole base assemblies 116 and 117, respectively.

The first and the second guide grooves 114 and 115 comprise extension holes 114a and 115a for assembly. The size of the extension holes 114a and 115a is bigger than the size of the first and the second supporting ends 118a and 118a' so that, when assembling, the first and the second supporting ends 118a and 118a' can be located in the guide rail parts 114b and 115b.

The first and the second guide grooves 114 and 115 are preferably integrally formed with the chassis 110 in a symmetric form, preferably by pressing.

The heights of the first and the second guide grooves 114 and 115, such as the height of a chassis plane 110 where the first and the second guide grooves 114 and 115 are formed, are set so that the first and the second guide rollers 116c and 117c control the up and down movement of the magnetic tape T when the first and the second pole bases 116a and 117a are installed in the first and the second guide grooves 114 and 115.

As described above, since the chassis 110 of the deck plate integrally forms the drum base 112 and the guide rail 107, this reduces the number of manufacturing molds, the number of assembly process steps and manufacturing costs, while increasing productivity. Further, the first and the second pole bases 116a and 117a are supported and moved about a centre of gravity so as not to interfere with the impedance roller 124 and the head drum 111 when the magnetic tape T is loaded/unloaded. Also, the guide rail 107 comprises grooves 114 and 115 formed at the same height as the chassis plane. This is so as not to interfere with the other parts and the inside of the cassette when loading/unloading the tape T and thus to perform a mechanically stable operation.

The loading and unloading of tapes into the tape deck 100 of the camcorder will now be described in more detail with reference to Figures 4 to 8.

First, the loading operation will be described. The tape cassette C is moves onto the reel tables 115a and 115b as represented by a dotted line of Figure 4, and then the loading motor 147 is operated. This rotates the tension arm 122 counterclockwise using the tension arm operation unit. Accordingly, the tension pole 123 pushes the magnetic tape T towards the impedance roller 124 as shown in Figure 5.

The first and the second pole bases 116a and 117a of the first and the second pole base assemblies 116 and 117 are moved toward the head drum 111 by the pole base operation unit. This receives power from the loading motor 147. Accordingly, the first and the second guide bosses 118 and 118' (shown in Figure 9) slides along the first and the second guide grooves 114 and 115 of the guide rail 107. Consequently, the first and the second guide rollers 116c and 117c draw out the magnetic tape T and position the magnetic tape T against to the head drum 111.

At this point, since the first and the second guide bosses 118 and 118' are separated from the central axes of the first and the second guide rollers 116c and 117c by as much as about 1.2mm in the direction of the head drum assembly 102, the first and the second pole base assemblies 116 and 117 does not only move without contacting the impedance roller 124 and the head drum 111, but also moves in a stable manner around the centre of gravity.

The main slide member 113 is operated by the slide member operation unit to preferably move in the direction of arrow A, which is to the left. Accordingly, the guide protuberance 159 of the main slide member 113 pushes the lower end of the pressing lever 135 to the left. Thus, the tension spring 137 is extended while the pressing lever 135 is rotated clockwise. Due to the tension of the tension spring 137, the pinch roller 133 is contacts the capstan shaft 148.

The review arm 155 is also rotated clockwise by the guide groove 157 of the main slide member 113 and, accordingly, the review pole 156 pulls the magnetic tape T to the right of the chassis 110 so as to give a predetermined tension to the magnetic tape T.

With the magnetic tape T loaded into the position shown in Figure 5, the capstan motor 140 performs the functions of REC/PLAY and FF/REW for winding and releasing, at high speed, the magnetic tape T onto and from the tape reel of the cassette C. This is done by operating the reel tables 115a and 115b on the supplying and the winding side of the chassis using the power transfer gear train.

To unload the magnetic tape, the deck mechanism 100 operates in reverse. Accordingly, the tension pole 123, the first and the second guide rollers 116c and 117c, the pinch roller 133, and the review pole 156 are restored back to the position shown in Figure 4.

As described above, according to the tape deck of the invention, the drum base and the guide rail need not be elaborately manufactured using separate moulds because the drum base and the guide rail are formed integrally with the chassis. This reduces manufacturing costs.

Although the tape deck 100 has been explained using a camcorder as an example, the present invention is not limited to that specific case, but may be applied to a magnetic recording/playing apparatus having a tape deck such as a video tape recorder and/or a digital audio tape recorder.

Although the tape deck 100 having the deck plate comprising a single chassis has been described and illustrated, the deck mechanism 1 comprising the main chassis and the sub chassis, as shown in Figure 1 is also applicable.

Further, the process for assembling the drum base and the guide rail using screws is not required because the drum base and the guide rail are formed integrally with the chassis, and thus, the assembly process is simplified and productivity is increased.

Furthermore, the pole bases are supported and moved about the centre of gravity without interfering with the impedance roller and the head drum when the magnetic tape is loaded/unloaded because the guide bosses of the pole bases are separated from the central axes of the guide roller by a predetermined distance tin the direction of the head drum. Also, since the guide rail comprises the groove formed at the same height as the chassis plane and the guide rail does not interfere with other parts or the inside of the cassette when being loaded/unloaded, mechanically stable operation is achieved.

## Claims

1. A tape deck comprising a chassis (110), a head drum (111) mounted on said chassis (110), a pole base (116), and a pole base guide slot (114) in the chassis (110), **characterised in that** the chassis (110) is configured to define the full extent of the guide slot (114) therein.

2. A tape deck according to claim 1, the pole base (116) comprising a roller (116c) over which magnetic tape (T) is fed and securing means (118) located at the centre of gravity of the pole base (116) for securing the pole base (116) to the guide slot (114), wherein the pole base (116) rotates about the securing means (118).

3. A tape deck according to claim 2, wherein the head drum (111) is located to one side of the guide slot (114) and the securing means (118) are located a predetermined distance towards the head drum (111).

4. A deck plate of a magnetic recording /playing apparatus having a chassis which mounts a drum base for supporting a head drum assembly and a guide rail for guiding at least one pole base assembly,
wherein the guide rail guides an entire moving path of the pole base assemblies, and
the chassis integrally forms the drum base and the guide rail.

5. The deck plate of claim 4, wherein the drum base is formed integrally with the chassis and bent upward by a predetermined angle from the chassis.

6. The deck plate of claim 4, wherein the guide rail comprises a guide groove formed at the same height as a plane of the chassis.

7. The deck plate of claim 6, wherein the pole base assembly comprises:
a guide roller for controlling up and down movement of a magnetic tape; and
a pole base mounting the guide roller, having a guide boss of which central axis is separated a predetermined distance toward the head drum assembly from a central axis of the guide roller, for being guided along the guide groove.

8. The deck plate of claim 7, wherein the predetermined separated distance of the guide boss from the central axis of the guide roller is about 1.2mm.

9. A magnetic recording/playing apparatus comprising:
a deck plate having a drum base for supporting a head drum assembly, a guide rail for guiding an entire moving path of at least one pole base assembly, and
a chassis mounting the drum base and the guide rail,
wherein the chassis integrally forms the drum base and the guide rail.

10. The magnetic recording/playing apparatus of claim 9, wherein the drum base is formed integrally with the chassis and bent upward a predetermined angle from the chassis.

11. The magnetic recording/playing apparatus of claim 9, wherein the guide rail comprises a guide groove formed at the same height as a plane of the chassis.

12. The magnetic recording/playing apparatus of claim 11, wherein the pole base assembly comprises:
a guide roller for controlling up and down movement of a magnetic tape; and
a pole base for mounting the guide roller and having a guide boss of which central axis is separated a predetermined distance toward the head drum assembly from a central axis of the guide roller, for being guided along the guide groove.

13. The magnetic recording/playing apparatus of claim 12, wherein a predetermined separated distance of the guide boss from the central axis of the guide roller is about 1.2mm.
